(19) Europäisches Patentamt
European Patent Office
Office européen des brevets

(11) **EP 2 753 672 B1**

(12) **FASCICULE DE BREVET EUROPEEN**

(45) Date de publication et mention de la délivrance du brevet:
**20.10.2021 Bulletin 2021/42**

(51) Int Cl.:
***C09K 8/528*** *(2006.01)*     ***C09K 8/54*** *(2006.01)*

(21) Numéro de dépôt: **12773014.1**

(22) Date de dépôt: **04.09.2012**

(86) Numéro de dépôt international:
**PCT/FR2012/051978**

(87) Numéro de publication internationale:
**WO 2013/034846 (14.03.2013 Gazette 2013/11)**

(54) **ADDITIFS DI-FONCTIONNELS ANTI-DÉPÔTS ET ANTI-CORROSION**

BIFUNKTIONELLE ABLAGERUNGS- UND KORROSIONSSCHUTZZUSÄTZE

BIFUNCTIONAL ANTI-DEPOSIT AND ANTI-CORROSION ADDITIVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2011 FR 1157842**

(43) Date de publication de la demande:
**16.07.2014 Bulletin 2014/29**

(73) Titulaire: **ARKEMA FRANCE**
**92700 Colombes (FR)**

(72) Inventeur: **POU, Tong Eak**
**69540 Irigny (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A1- 2 264 119     WO-A1-2008/110789**
**WO-A2-2006/078723     US-A- 4 713 184**
**US-A1- 2008 227 668     US-A1- 2009 118 380**

EP 2 753 672 B1

**Description**

La présente invention concerne le domaine de l'extraction des hydrocarbures et plus spécifiquement des additifs qui sont ajoutés auxdits hydrocarbures et/ou aux fluides contenant lesdits hydrocarbures, afin de limiter les colmatages et la corrosion des installations (canalisations, vannes, et autres), utilisées pour leur extraction.

Lors de l'extraction des hydrocarbures (ou production des hydrocarbures), plus particulièrement lors de l'extraction de pétrole brut et de l'extraction de gaz des couches souterraines, on produit toujours simultanément de l'eau, du gaz et des hydrocarbures qui sont remontés vers la surface. La présence d'eau, en quantités plus ou moins importantes, est ainsi inhérente à la production d'hydrocarbures, et est à l'origine de nombreux problèmes qui viennent perturber les lignes de production.

En effet, l'eau présente avec les hydrocarbures extraits est souvent responsable de la corrosion des tuyaux, canalisations, tubes, vannes et autres éléments métalliques. Cette eau peut éventuellement être ré-injectée dans les couches souterraines pour aider l'extraction des hydrocarbures. En outre l'eau contient le plus souvent des minéraux, dissous ou non, qui peuvent précipiter, et/ou s'agglomérer, selon les conditions de température, de pression, et de pH.

Pour résoudre ces problèmes il est bien connu d'utiliser plusieurs additifs chimiques qui sont injectés dans les mélanges d'hydrocarbures, de gaz et d'eau lorsqu'ils sont extraits, et ou dans les couches souterraines où ils sont présents, avant leur extraction.

Ces additifs peuvent se regrouper en inhibiteurs de corrosion (ou additifs anti-corrosion), bactéricides, additifs anti-dépôts minéraux, additifs anti-hydrates, désémulsionnants, additifs anti-asphaltènes, additifs anti-paraffines, et autres. Ces produits sont en général incompatibles entre eux, et il est aujourd'hui nécessaire de les injecter un par un, de manière séparée, ce qui multiplie les interventions et les systèmes de stockage, de circulation et d'injection.

WO2008110789 décrit des compositions anti-corrosions contenant des additifs choisis parmi les aldéhydes α,β-insaturés, les composés comprenant du soufre, et les tensio-actifs azotés anioniques, nonioniques, amphotères ou zwitterioniques. D. Ann Davis (« Development of combined multifunctional chemical inhibitors », 2nd International Conference on « Controlling Hydrates, Waxes And Asphaltenes », October 20th-21st, (1997), Aberdeen, IBC UK Conferences Ltd.) a présenté diverses possibles associations anti-asphaltènes / inhibiteurs de paraffine / anti-dépôts de minéraux, inhibiteurs d'hydrates / inhibiteurs de corrosion / inhibiteurs de paraffine et également anti-dépôts de minéraux / inhibiteurs de paraffine.

Les formules associant les anti-dépôts de minéraux qui sont utilisées pour empêcher la formation de dépôts de sels minéraux comme par exemple, et à titre non limitatif, les sels d'alcalins et d'alcalino-terreux tels que les sels de calcium, de baryum, de strontium, et en particulier le carbonate de calcium, et/ou les sulfates de calcium ou de baryum ne sont toutefois pas citées dans cette publication. De même, cette publication ne fait pas mention des inhibiteurs de corrosion.

Or il serait très intéressant de pouvoir disposer d'un tel additif di-fonctionnel, associant à la fois les propriétés d'un inhibiteur de corrosion et les propriétés d'un additif anti-dépôt de minéraux. Un tel additif di-fonctionnel permettrait de réduire notamment le nombre d'interventions ainsi que le nombre de lignes et points d'injection, ce qui représenterait une économie considérable dans le système d'extraction des hydrocarbures.

Il a maintenant été découvert, et ceci représente un premier objet de l'invention, qu'il est possible de rendre compatible un inhibiteur de corrosion et un additif anti-dépôt de minéraux, c'est-à-dire d'obtenir une solution homogène, limpide et surtout stable, d'au moins un inhibiteur de corrosion et d'au moins un additif anti-dépôt de minéraux, qui peut être utilisée efficacement lors de l'extraction d'hydrocarbures, pétrole brut et/ou gaz, soit pour l'extraction proprement dite, soit pour être ajoutée aux fluides ré-injectés qui contiennent une majorité d'eau extraite des puits de production, dite eau de production dans la suite du présent exposé.

Ainsi, la présente invention concerne tout d'abord une composition prête à l'emploi comprenant :

- au moins un inhibiteur de corrosion,
- au moins un additif anti-dépôt de minéraux, et
- au moins un agent de compatibilité qui est un tensio-actif non ionique, cationique ou amphotère, soluble dans l'eau.

Dans la composition selon l'invention, on entend par inhibiteur de corrosion tous les inhibiteurs de corrosion connus de l'homme du métier, en particulier ceux les amines grasses, les dérivés d'amines grasses (amino-acides, amino-alcools, amido-amines, ammoniums quaternaires, dérivés de pyridine), les imidazolines substituées par au moins une chaîne grasse, les ester-amines, les éther-amines, les dérivés d'alcools gras et les esters phosphoriques substitués par au moins une chaîne grasse.

Par chaîne grasse, on entend un radical hydrocarboné comportant au moins 8, de préférence au moins 10 atomes de carbone, en particulier un radical hydrocarboné comportant de 8 à 40, de préférence de 10 à 30 atomes de carbone, de manière encore plus préférée, de 12 à 28 atomes de carbone.

À titre d'exemples d'inhibiteurs de corrosion qui peuvent être avantageusement utilisés dans les compositions de la présente invention, on peut citer, de manière non limitative, les inhibiteurs de corrosion commercialisés par la société CECA S.A., et notamment ceux de la gamme Norust®, par exemple l'Amphoram® CP1, le Noramium® DA50, et autres.

Dans la composition selon l'invention, on entend par additifs anti-dépôts de minéraux, tous les additifs anti-dépôts de minéraux connus de l'homme du métier, et en particulier ceux utilisés couramment dans le domaine de l'extraction d'hydrocarbures. Ces additifs anti-dépôts sont le plus souvent des composés anioniques, ce qui les rend incompatibles avec les inhibiteurs de corrosion définis plus haut et qui sont généralement des composés cationiques, non ioniques ou amphotères.

À titre d'exemples non limitatifs, le ou les additif(s) anti-dépôts de minéraux utilisable(s) dans les compositions de la présente invention sont choisis parmi :

- les amino-phosphonates acides ou neutralisés, par exemple ceux commercialisés par Solutia sous le nom Dequest®, ou par Lanxess sous le nom Bayhibit® ;
- les poly(acides acryliques), et les poly(acrylates d'alkyle), tels que ceux commercialisé par Coatex sous la dénomination générique Coatex TH® ;
- les copolymères à base d'acides phosphino-carboxyliques, par exemple ceux commercialisés par la société BWR, sous la dénomination Bellasol®;
- les tanins ;
- les lignosulfonates ;
- les polyacrylamides ;
- les naphtalène-sulfonates ;
- et autres additifs anti-dépôt de minéraux connus de l'homme du métier.

Comme indiqué plus haut, dans le domaine de l'extraction d'hydrocarbures, les inhibiteurs de corrosion sont incompatibles avec les additifs anti-dépôts : les efficacités inhibitrices des inhibiteurs de la corrosion induite par le dioxyde de carbone ($CO_2$) et/ou le sulfure d'hydrogène ($H_2S$) sont grandement, voire totalement détériorées par les additifs anti-dépôts de minéraux. La compatibilité de ces deux additifs est un des problèmes à prendre en considération pour la sélection des inhibiteurs corrosion.

Il a maintenant été découvert qu'il est possible de préparer des formulations associant les inhibiteurs de corrosion et les additifs anti-dépôts, tout en conservant le même degré d'efficacité, ou tout au moins un degré d'efficacité acceptable, à la fois de l'inhibiteur de corrosion et de l'additif anti-dépôts de minéraux. Selon un mode de réalisation tout particulièrement préféré, ces formulations (compositions selon la présente invention) sont des formulations aqueuses.

Cette association est rendue possible grâce à l'ajout d'un agent de compatibilité permettant ainsi l'obtention d'une formulation di-fonctionnelle homogène, limpide et stable, sans formation de précipité, possédant à la fois les propriétés d'un inhibiteur de corrosion et d'un additif anti-dépôts de minéraux, cette formulation di-fonctionnelle pouvant être administrée au moyen d'une seule ligne d'injection dans les produits d'extraction pétrolière et/ou gazière, notamment en eaux profondes.

L'agent de compatibilité présent dans la composition selon la présente invention est un tensio-actif appartenant à la famille des tensio-actifs non ioniques, cationiques ou amphotères, et de préférence et un tensio-actif de la famille des amines éthoxylées à chaîne grasse, des amines quaternisées à chaîne grasse, des amino-acides à chaîne grasse, des condensats oxyéthylés et/ou oxypropylés et/ou oxybutylés, des alkylarylsulfonates, des alcools à chaîne grasse oxyéthylés et/ou oxypropylés, et autres, ainsi que les mélanges de deux ou plusieurs d'entre eux en toutes proportions, où l'expression « chaîne grasse » est telle que définie précédemment.

On peut citer plus précisément, à titre d'exemples non limitatifs de tensio-actifs permettant la compatibilité des inhibiteurs de corrosion et des additifs anti-dépôts de minéraux notamment les amino-acides alcoxylés, les imidazolines alcoxylées, le Noramox® C11, le Noramium® DA50 l'Amphoram® CP1, les Pluronic®, et les Remcopal®, commercialisés par la société CECA S.A. Le terme « alcoxylé » qualifie des composés ayant subi une ou plusieurs réactions d'alcoxylation, en particulier éthoxylation (composés éthoxylés), propoxylation (composés propoxylés), butoxylation (produits butoxylés). On préfère les composés éthoxylés et/ou propoxylés, de préférence encore, éthoxylés.

Parmi les tensio-actifs cités ci-dessus utilisables comme agents de compatibilité pour les compositions selon la présente invention, certains d'entre eux présentent également des propriétés inhibitrices de corrosion intrinsèques. C'est le cas par exemple pour le Noramium® DA50, l'Amphoram® CP1, et pour les amines éthoxylées, en particulier les imidazolines éthoxylées et le Noramox® C11.

En règle générale, dans le domaine de l'extraction d'hydrocarbures, il est courant de traiter de manière séparée les fluides extraits avec au moins un additif anti-dépôts de minéraux et avec un inhibiteur de corrosion dans une proportion pondérale d'environ 1:2. Or, dans ces proportions l'additif anti-dépôts et l'inhibiteur de corrosion sont incompatibles. Il a été maintenant découvert, de manière tout à fait surprenante, que l'ajout d'un agent de compatibilité, qui peut être lui-même un inhibiteur de corrosion, permet d'obtenir une composition homogène, limpide et stable, sans perturbation importante de l'activité anti-dépôts par l'inhibiteur de corrosion et sans perturbation importante de l'activité inhibitrice de corrosion par l'additif anti-dépôts de minéraux.

Selon un mode de réalisation préféré, la composition selon la présente invention comprend également au moins un solvant, généralement choisi parmi l'eau, les solvants organiques hydrosolubles et les mélanges eau / solvant(s) organique(s) hydrosoluble(s), de préférence encore parmi l'eau et les mélanges eau / solvant(s) organique(s) hydrosoluble(s). Parmi les solvants organiques hydrosolubles, on peut citer les alcools et les éthers en particulier, parmi lesquels on préfère les alcanols et les glycols, tel que par exemple, et de manière non limitative, ceux choisis parmi le méthanol, l'éthanol, le glycol, le monoéthylèneglycol (MEG), le diéthylèneglycol (DEG), le triéthylèneglycol (TEG), le 2-butoxyéthanol, et les mélanges de deux ou plusieurs d'entre eux en toutes proportions.

Selon encore un mode de réalisation préféré, la composition de la présente invention comprend :

- de 10% à 40%, de préférence de 15% à 40%, de préférence encore de 20% à 40% en poids, d'au moins un additif anti-dépôt de minéraux,
- de 15% à 60%, de préférence de 20% à 55%, de préférence encore de 25% à 50% en poids, d'au moins un inhibiteur de corrosion,
- de 1% à 20%, de préférence de 4% à 20%, d'au moins un agent de compatibilité tel que défini précédemment, et
- éventuellement au moins un solvant tel que défini plus haut en quantité suffisante pour (q.s.p.) atteindre 100%.

Sauf indication contraire, dans la description de la présente invention, tous les pourcentages sont exprimés en poids.

La composition selon l'invention est une composition di-fonctionnelle stable, homogène et limpide, présentant à la fois les propriétés d'un inhibiteur de corrosion et d'un additif anti-dépôt. L'agent de compatibilité présent dans la dite composition di-fonctionnelle permet de contrer, ou tout au moins de diminuer très fortement, l'effet antagoniste de l'additif anti-dépôt de minéraux envers l'inhibiteur de corrosion.

Ainsi, grâce à la composition selon la présente invention, l'homme du métier peut disposer d'un inhibiteur de corrosion possédant des propriétés anti-dépôts de minéraux ou bien encore l'homme du métier peut disposer d'un agent anti-dépôts de minéraux doté de propriétés inhibitrices de corrosion.

La présente invention telle que revendiquée concerne également une composition di-fonctionnelle telle que décrite ci-dessus, comprenant en outre un additif permettant d'améliorer encore l'efficacité de la composante inhibitrice de corrosion. En effet, dans certains cas, il a été observé que les propriétés inhibitrices de corrosion peuvent être altérées en raison de la présence de l'additif anti-dépôts de minéraux, et ce, malgré la présence de l'agent de compatibilité.

Ce problème est résolu de manière efficace grâce à la présence, dans la composition di-fonctionnelle selon l'invention, d'au moins un additif soufré, choisi parmi les mercapto-acides, les mercapto-alcools, ainsi que les mélanges de deux ou plusieurs d'entre eux en toutes proportions.

Selon un autre aspect, l'invention concerne l'utilisation d'au moins un additif soufré tel que défini précédemment dans une composition di-fonctionnelle telle que définie précédemment comprenant au moins un additif anti-dépôts de minéraux et au moins un inhibiteur de corrosion, cette composition di-fonctionnelle étant de préférence utilisée dans le domaine de l'extraction des hydrocarbures.

Des exemples non limitatifs de tels additifs soufrés qui peuvent avantageusement être présents dans la composition di-fonctionnelle de l'invention sont le mercapto-éthanol, le mercapto-propanol, l'acide thioglycolique, l'acide mercaptopropionique, pour ne citer que les plus aisément disponibles d'entre eux.

Ainsi, et selon encore un autre aspect, la présente invention concerne une composition comprenant :

- de 10% à 40%, de préférence de 15% à 40%, de préférence encore de 20% à 40% en poids, d'au moins un additif anti-dépôt de minéraux,
- de 15% à 60%, de préférence de 20% à 55%, de préférence encore de 25% à 50% en poids, d'au moins un inhibiteur de corrosion,
- de 1% à 20%, de préférence de 4% à 20%, d'au moins un agent de compatibilité tel que défini précédemment, et
- de 1% à 10%, de préférence de 3% à 10% en poids, d'au moins un additif soufré, tel que défini précédemment, et
- éventuellement au moins un solvant tel que défini plus haut en quantité suffisante pour (q.s.p.) atteindre 100%.

Les compositions di-fonctionnelles selon la présente invention peuvent en outre comprendre un ou plusieurs autres additifs, charges, et autres, inertes vis-à-vis des efficacités des inhibiteurs de corrosion et des additifs anti-dépôts de minéraux présents dans ladite composition di-fonctionnelle.

De tels additifs sont bien connus de l'homme du métier, et parmi ceux-ci, on peut citer, de manière non limitative, les stabilisants, conservateurs, anti-U.V., ignifugeants, solvants, colorants, et autres.

Les compositions di-fonctionnelles selon l'invention peuvent être préparées par tous moyens connus, et en général par simple mélange des divers composants desdites compositions dans un ordre quelconque. On préfère toutefois mélanger, sous agitation, le(s) inhibiteur(s) de corrosion et le ou les agent(s) de compatibilité, éventuellement dans le(s) solvant(s), puis, le(s) additif(s) anti-dépôts de minéraux, et enfin éventuellement le ou les additif(s) soufrés et les autres additifs définis ci-dessus.

Les compositions di-fonctionnelles selon la présente invention trouvent ainsi une utilisation tout à fait avantageuse dans le domaine de l'extraction des hydrocarbures, de pétrole et/ou de gaz. Ces compostions peuvent être injectées selon toutes méthodes bien connues de l'homme du métier, en continu, en batch ou en squeeze, de préférence en continu, dans les lignes d'extraction desdits hydrocarbures, dans les lignes d'injection des eaux de production, et de manière générale dans tout fluide aqueux, organique ou hydro-organique mis en œuvre dans les champs d'extraction d'hydrocarbures. On peut par exemple également injecter ces compositions via le système dit « gas-lift », bien connu de l'homme du métier.

La quantité injectée de formulation di-fonctionnelle selon l'invention peut varier dans de grandes proportions, selon les besoins et la nature et la composition des produits extraits. En règle générale la quantité injectée est comprise entre 1 ppm et 1000 ppm, de préférence entre 50 ppm et 800 ppm, où « ppm » représente des parties en poids de composition di-fonctionnelle pour un million de parties en volume de fluide aqueux, organique ou hydro-organique à traiter.

La présente invention est maintenant illustrée au moyen des exemples qui suivent.

## EXEMPLES

### Méthodes de mesure

*Efficacité anti-dépôts de minéraux (carbonate de calcium) :*

L'efficacité anti-dépôt de carbonate de calcium est déterminée selon la méthode de la « National Association of Corrosion Engineers » (NACE), Standard TM-03-074. Cette méthode est basée sur le dosage de calcium dans l'eau en absence et en présence d'additif anti-dépôt.

Les essais sont réalisés à 25 ppm (poids/volume) d'additif anti-dépôt dans une solution aqueuse de carbonate de calcium.

L'efficacité anti-dépôt est exprimée en pourcentage d'efficacité, selon la relation suivante :

$$\%\text{Eff (AD)} = \frac{([Ca_3] - [Ca_2])}{([Ca_1] - [Ca_2])} \times 100$$

où : %Eff (AD) représente le pourcentage d'efficacité de l'additif anti-dépôt, $[Ca_1]$ représente la concentration en ions calcium dissous, avant dépôt et sans additif, $[Ca_2]$ représente la concentration en ions calcium dissous, après dépôt et sans additif, et $[Ca_3]$ représente la concentration en ions calcium dissous, après dépôt et avec additif.

*Efficacité anti corrosion :*

L'efficacité anti-corrosion est exprimée sous forme de vitesse de corrosion d'un acier au carbone en fonction du temps. La vitesse de corrosion d'un acier est déterminée par la méthode dite LPR (« Linear Polarization Résistance »). En présence d'inhibiteur de corrosion, plus la vitesse de corrosion est faible plus l'inhibiteur est efficace.

Les mesures de vitesse de corrosion par la méthode LPR sont réalisées dans les conditions suivantes. Le milieu corrosif est une solution aqueuse de chlorure de sodium (NaCl) à 30 g/L. Cette solution est préalablement désaérée par barbotage d'azote, pendant au moins une heure. Elle est enfin saturée en dioxyde de carbone ($CO_2$). Le barbotage de $CO_2$ est maintenu pendant toute la durée de l'essai. La température de travail est de 80°C. Les essais sont réalisés à 50 ppm (poids/volume) d'inhibiteur de corrosion.

L'efficacité de l'inhibiteur de corrosion est exprimée en pourcentage d'efficacité, selon la relation suivante :

$$\%\text{Eff (IC)} = \frac{[(Vcor_1) - (Vcor_2)]}{(Vcor_1)} \times 100$$

où : %Eff (IC) représente le pourcentage d'efficacité de l'inhibiteur de corrosion, $Vcor_1$ représente la vitesse de corrosion en absence d'inhibiteur de corrosion et $Vcor_2$ représente la vitesse de corrosion en présence d'inhibiteur de corrosion.

Cependant, il est d'usage courant dans le domaine de l'anti-corrosion de considérer uniquement la vitesse de corrosion résiduelle (c'est-à-dire après traitement ou après injection de l'inhibiteur de corrosion). Plus cette vitesse de corrosion résiduelle est faible, plus l'inhibiteur de corrosion est efficace. Un inhibiteur de corrosion efficace, à une dose donnée, présente généralement une vitesse de corrosion résiduelle de l'acier inférieur à 0,1 mm/an.

**Exemple 1**

Il est connu qu'un additif anti-dépôts de minéraux additionné dans un milieu corrosif contenant un inhibiteur de corrosion fait perdre l'activité anti-corrosion de ce dernier.

Pour mettre en évidence ce phénomène, on réalise un test anti-corrosion selon la méthode LPR décrite ci-dessus, test dans lequel on trace une courbe de vitesse de corrosion en fonction du temps pour chacune des compositions suivantes :

- Composition 1 : CECA Norust® 740 à 50 ppm (poids/volume) dans l'eau ;
- Composition 2: CECA Norust® 740 à 50 ppm (poids/volume) avec 10 ppm (poids/volume) de Bellasol® S50 de BWR dans l'eau ;
- Composition 3 : CECA Norust® 740 à 50 ppm (poids/volume) avec 25 ppm (poids/volume) de Bellasol® S50 de BWR dans l'eau ;
- Composition 4 : CECA Norust® 740 à 50 ppm (poids/volume) avec 50 ppm (poids/volume) de Bellasol® S50 de BWR dans l'eau.

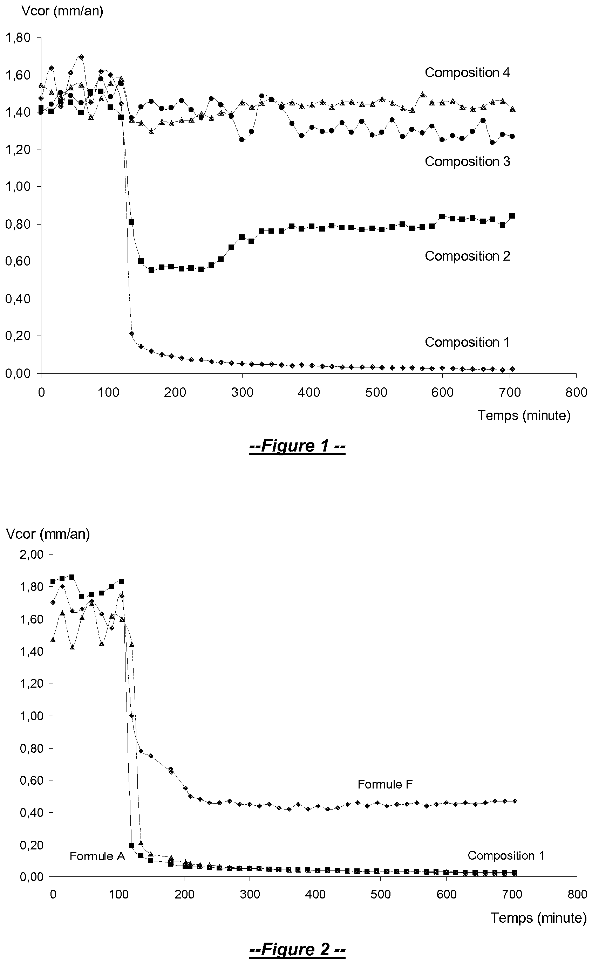

La Figure 1 présente les courbes de vitesses de corrosion (Vcor, exprimées en mm/an) observées en fonction du temps exprimé en minutes pour chacune des Compostions 1 à 4 décrites ci-dessus. Comme montré sur la Figure 1, la présence de l'additif anti-dépôts (Bellasol® S50) entraîne une perte d'efficacité de l'inhibiteur de corrosion (Norust® 740). Plus la quantité d'additif anti-dépôts est importante, plus l'activité anti-corrosion décroît.

L'effet antagoniste de l'inhibiteur de corrosion sur l'efficacité de l'additif anti-dépôts de minéraux est similaire. L'exemple 2 illustre cet effet.

**Exemple 2**

On mesure l'efficacité de deux additifs anti-dépôt de carbonate de calcium, le Bayhibit® AM50 de Lanxess (25 ppm poids/vol) et le Bellasol® S50 de BWR (25 ppm poids/vol), selon la méthode de la NACE décrite plus haut, en absence et en présence d'inhibiteur de corrosion, le Norust® 740 de CECA (50 ppm poids/vol).

Le mélange Norust® 740 avec Bayhibit® AM50, dans ces proportions, se présente sous la forme d'un liquide légèrement trouble qui pourrait être acceptable dans les utilisations envisagées. Toutefois l'efficacité de ce mélange est tout à fait insuffisante, comme l'indiquent les résultats présentés dans le Tableau 1 ci-dessous.

Le mélange Norust® 740 avec Bellasol® S50, dans ces proportions, n'est pas stable et une séparation de phase est observée, avec une précipitation d'un gel visqueux. Ceci montre déjà l'incompatibilité physique des deux types d'additifs. Par ailleurs, l'influence antagoniste de l'inhibiteur de corrosion sur l'additif anti-dépôts de minéraux, comme dans le cas du mélange décrit au paragraphe précédent, est présentée dans le Tableau 1 ci-dessous.

-- **Tableau 1** --

|  | Bayhibit® AM50 | Bayhibit® AM50 + Norust® 740 | Bellasol® S50 | Bellasol® S50 + Norust® 740 |
|---|---|---|---|---|
| % efficacité anti-dépôt | 93% | 21% | 91% | 10% |

Les résultats des exemples 1 et 2 montrent de manière indiscutable l'incompatibilité entre un additif anti-dépôts de minéraux et un inhibiteur de corrosion.

**Exemple 3**

On prépare une Formule F, selon l'invention, à base de Norust® 740, de Bellasol® S50, et, comme un agent de compatibilité; le Noramox® C11 de CECA. Cette Formule F est limpide, stable et homogène.

Plus précisément la composition de la formulation F est la suivante :

| | |
|---|---|
| - Norust® 740 : | 9% |
| - Bellasol® S50 : | 18% |
| - Noramox® C11 : | 12% |

(suite)

- Solvant glycolique :     q.s.p. 100%

Le solvant glycolique utilisé est un solvant à base de monoéthylèneglycol.

Cette Formule F est engagée dans des tests d'inhibition de corrosion et d'efficacité anti-dépôts de minéraux, comme décrit aux Exemples 1 et 2. Les résultats de l'efficacité anti-dépôt de carbonate de calcium sont de 91% avec le Bellasol® S50, et de 90% avec la Formule F.

Du point de vue des propriétés anti-dépôts de minéraux, on constate que la Formule F présente la même efficacité que l'additif de référence.

### Exemple 4

Un test de corrosion selon la méthode LPR est réalisé, comme décrit dans l'exemple 1, afin de comparer les vitesses de corrosion de la Formule F par rapport à la référence Norust® 740.

À la dose de 50 ppm, le Norust® 740 présente une vitesse de corrosion stabilisée inférieure à 0,1 mm/an. À cette même dose, la Formule F présente une vitesse de corrosion stabilisée d'environ 0,45 mm/an.

Il est ainsi clairement établi que la présence d'un agent de compatibilité dans une formulation comprenant à la fois un additif anti-dépôts de minéraux (AD) et un inhibiteur de corrosion (IC) permet de contrer l'activité antagoniste de l'AD envers l'IC et vice-versa. Bien que cette formulation soit à la fois inhibitrice de corrosion et inhibitrice de dépôts de minéraux, il est possible d'améliorer encore les performances de l'activité anti-corrosion.

### Exemple 5

On prépare une autre formulation de AD et de IC, en ajoutant un additif soufré afin d'améliorer encore les performances d'inhibition de corrosion. Cette formulation est notée Formule A.

La Formule A présente la composition suivante :

| Norust® 740 : | 9% |
|---|---|
| Bellasol® S50 : | 18% |
| Noramox® C11 : | 12% |
| Acide thioglycolique : | 4,5% |
| Solvant glycolique : | q.s.p. 100% |

Cette Formule A présente une efficacité anti-dépôts de minéraux tout à fait semblable à celle de l'anti-dépôt de référence (environ 90%). La Formule A est également engagé dans un test d'inhibition de corrosion selon la méthode LPR.

La figure 2 présente les courbes de vitesse de corrosion (Vcor, exprimées en mm/an) en fonction du temps (exprimé en minutes) de la Composition 1 (référence), de la Formule F et de la Formule A. Il ressort clairement de cette figure que la Formule A présente une vitesse de corrosion stabilisée inférieure à 0,1 mm/an, de l'ordre 0,03 mm/an, c'est-à-dire tout à fait semblable à celle observée pour la Composition 1 qui est l'inhibiteur de corrosion de référence, le Norust® 740.

### Revendications

1. Composition comprenant au moins un inhibiteur de corrosion, au moins un additif anti-dépôt de minéraux, au moins un additif soufré choisi parmi les mercapto-acides et les mercapto-alcools, et au moins un agent de compatibilité, composition dans laquelle :

   - l'agent de compatibilité est un tensio-actif non ionique, cationique ou amphotère, soluble dans l'eau, choisi parmi les amines éthoxylées à chaîne grasse, les amines quaternisées à chaîne grasse, les amino-acides à chaîne grasse, les condensats oxyéthylés et/ou oxypropylés, les alkylarylsulfonates, les alcools à chaîne grasse oxyéthylés et/ou oxypropylés, ainsi que les mélanges de deux ou plusieurs d'entre eux en toutes proportions, et
   - l'inhibiteur de corrosion est choisi parmi les amines grasses, les dérivés d'amines grasses choisis parmi amino-acides, amino-alcools, amido-amines, ammoniums quaternaires et dérivés de pyridine, les imidazolines substituées par au moins une chaîne grasse, les ester-amines, les éther-amines, les dérivés d'alcools gras et les esters phosphoriques substitués par au moins une chaîne grasse,
l'expression « chaîne grasse » définissant un radical hydrocarboné comportant au moins 8 atomes de carbone.

2.  Composition selon la revendication 1, dans laquelle l'additif anti-dépôt de minéraux est choisi parmi les amino-phosphonates acides ou neutralisés, les poly(acides acryliques), les poly(acrylates d'alkyle), les copolymères à base d'acides phosphino-carboxyliques, les tanins, les lignosulfonates, les polyacrylamides, les naphtalène-sulfonates, et autres.

3.  Composition selon l'une quelconque des revendications précédentes, comprenant en outre au moins un solvant, de préférence choisi parmi l'eau, les solvants organiques hydrosolubles et les mélanges eau / solvant(s) organique(s) hydrosoluble(s).

4.  Composition selon l'une quelconque des revendications précédentes, comprenant :

    - de 10% à 40%, de préférence de 15% à 40%, de préférence encore de 20% à 40% en poids, d'au moins un additif anti-dépôt de minéraux,
    - de 15% à 60%, de préférence de 20% à 55%, de préférence encore de 25% à 50% en poids, d'au moins un inhibiteur de corrosion,
    - de 1% à 20%, de préférence de 4% à 20% en poids, d'au moins un agent de compatibilité tel que défini précédemment, et
    - éventuellement au moins un solvant en quantité suffisante pour (q.s.p.) atteindre 100%.

5.  Composition selon l'une quelconque des revendications précédentes, dans laquelle l'additif soufré est choisi parmi le mercapto-éthanol, le mercapto-propanol, l'acide thioglycolique et l'acide mercaptopropionique.

6.  Composition selon l'une quelconque des revendications précédentes, comprenant :

    - de 10% à 40%, de préférence de 15% à 40%, de préférence encore de 20% à 40% en poids, d'au moins un additif anti-dépôt de minéraux,
    - de 15% à 60%, de préférence de 20% à 55%, de préférence encore de 25% à 50% en poids, d'au moins un inhibiteur de corrosion,
    - de 1% à 20%, de préférence de 4% à 20%, d'au moins un agent de compatibilité tel que défini précédemment, et
    - de 1% à 10%, de préférence de 3% à 10% en poids, d'au moins un additif soufré, tel que défini précédemment, et
    - éventuellement au moins un solvant en quantité suffisante pour (q.s.p.) atteindre 100%.

7.  Utilisation d'une composition selon l'une quelconque des revendications précédentes dans le domaine de l'extraction des hydrocarbures, de pétrole ou de gaz, en continu, en batch ou en squeeze, de préférence en continu, dans les lignes d'extraction desdits hydrocarbures.

8.  Utilisation selon la revendication précédente, dans laquelle la quantité de composition di-fonctionnelle injectée est comprise entre 1 ppm et 1000 ppm, de préférence entre 50 ppm et 800 ppm (poids/volume).

9.  Utilisation d'au moins un additif soufré choisi parmi les mercapto-acides et, les mercapto-alcools, dans une composition di-fonctionnelle selon l'une quelconque des revendications 1 à 6, utilisée dans le domaine de l'extraction des hydrocarbures, ladite composition comprenant au moins un additif anti-dépôts de minéraux et au moins un inhibiteur de corrosion.

**Patentansprüche**

1.  Zusammensetzung, die mindestens einen Korrosionshemmer, mindestens einen Zusatzstoff zur Verhinderung der Ablagerung von Mineralstoffen, mindestens einen schwefelhaltigen Zusatzstoff, der aus den Mercaptosäuren und den Mercaptoalkoholen ausgewählt ist, und mindestens ein verträglichmachendes Mittel umfasst, wobei bei dieser Zusammensetzung:

    - es sich bei dem verträglichmachenden Mittel um ein nichtionisches, kationisches oder amphoteres Tensid handelt, welches in Wasser löslich ist, wobei es aus den ethoxylierten Aminen mit fettartiger Kette, den quaternisierten Aminen mit fettartiger Kette, den Aminosäuren mit fettartiger Kette, den ethoxylierten und/oder propoxylierten Kondensationsprodukten, den Alkylarylsulfonaten, den ethoxylierten und/oder propoxylierten Alkoholen mit fettartiger Kette sowie den Mischungen aus zweien oder mehreren davon in beliebigen Verhältnissen ausgewählt ist, und

- der Korrosionshemmer aus den Fettaminen, den Fettaminderivaten, welche aus Aminosäuren, Aminoalkoholen, Amidoaminen, quartären Ammoniumverbindungen und Pyridinderivaten ausgewählt sind, den Imidazolinen, welche mit mindestens einer fettartigen Kette substituiert sind, den Esteraminen, den Etheraminen, den Fettalkoholderivaten und den Phosphorsäureestern, welche mit mindestens einer fettartigen Kette substituiert sind, ausgewählt ist,

wobei der Ausdruck "fettartige Kette" einen Kohlenwasserstoffrest bezeichnet, der mindestens 8 Kohlenstoffatome aufweist.

2. Zusammensetzung nach Anspruch 1, wobei der Zusatzstoff zur Verhinderung der Ablagerung von Mineralstoffen aus den sauren oder neutralisierten Aminophosphonaten, den Polyacrylsäuren, den Polyalkylacrylaten, den Copolymeren auf Basis von Phosphinocarbonsäuren, den Tanninen, den Lignosulfaten, den Polyacrylamiden, den Naphthalinsulfonaten und anderen ausgewählt ist.

3. Zusammensetzung nach einem beliebigen der vorhergehenden Ansprüche, wobei sie darüber hinaus mindestens ein Lösungsmittel umfasst, das vorzugsweise aus Wasser, wasserlöslichen organischen Lösungsmitteln sowie Mischungen aus Wasser und einem oder mehreren wasserlöslichen Lösungsmittel(n) ausgewählt ist.

4. Zusammensetzung nach einem beliebigen der vorhergehenden Ansprüche, wobei sie Folgendes umfasst:

- 10 % bis 40 %, vorzugsweise 15 % bis 40 %, mit noch größerem Vorzug 20 % bis 40 % nach Gewicht, mindestens eines Zusatzstoffs zur Verhinderung der Ablagerung von Mineralstoffen,
- 15 % bis 60 %, vorzugsweise 20 % bis 55 %, mit noch größerem Vorzug 25 % bis 50 % nach Gewicht, mindestens eines Korrosionshemmers,
- 1 % bis 20 %, vorzugsweise 4 % bis 20 % nach Gewicht, mindestens eines verträglichmachenden Mittels gemäß der vorstehenden Begriffsbestimmung, und
- möglicherweise mindestens ein Lösungsmittel, dessen Menge ausreicht (q.s.p.), um 100 % zu erreichen.

5. Zusammensetzung nach einem beliebigen der vorhergehenden Ansprüche, wobei der schwefelhaltige Zusatzstoff aus Mercaptoethanol, Mercaptopropanol, Thioglykolsäure und Mercaptopropionsäure ausgewählt ist.

6. Zusammensetzung nach einem beliebigen der vorhergehenden Ansprüche, wobei sie Folgendes umfasst:

- 10 % bis 40 %, vorzugsweise 15 % bis 40 %, mit noch größerem Vorzug 20 % bis 40 % nach Gewicht, mindestens eines Zusatzstoffs zur Verhinderung der Ablagerung von Mineralstoffen,
- 15 % bis 60 %, vorzugsweise 20 % bis 55 %, mit noch größerem Vorzug 25 % bis 50 % nach Gewicht, mindestens eines Korrosionshemmers,
- 1 % bis 20 %, vorzugsweise 4 % bis 20 %, mindestens eines verträglichmachenden Mittels gemäß der vorstehenden Begriffsbestimmung, und
- 1 % bis 10 %, vorzugsweise 3 % bis 10 % nach Gewicht, mindestens eines schwefelhaltigen Zusatzstoffs gemäß der vorstehenden Begriffsbestimmung, und
- möglicherweise mindestens ein Lösungsmittel, dessen Menge ausreicht (q.s.p.), um 100 % zu erreichen.

7. Verwendung einer Zusammensetzung gemäß einem beliebigen der vorhergehenden Ansprüche auf dem Gebiet der Förderung von Kohlenwasserstoffen, aus Erdöl oder aus Gas, im kontinuierlichen, chargenweisen oder druckgetriebenen Verfahren, vorzugsweise im kontinuierlichen Verfahren, in den Anlagen zur Förderung dieser Kohlenwasserstoffe.

8. Verwendung nach dem vorhergehenden Anspruch, wobei die Menge der Zusammensetzung mit zwei Aufgaben, welche injiziert wird, im Bereich von 1 ppm bis 1000 ppm, vorzugsweise von 50 ppm bis 800 ppm (Gewicht/Volumen), liegt.

9. Verwendung mindestens eines schwefelhaltigen Zusatzstoffs, der aus den Mercaptosäuren und den Mercaptoalkoholen ausgewählt ist, in einer Zusammensetzung mit zwei Aufgaben nach einem beliebigen der Ansprüche 1 bis 6, welche auf dem Gebiet der Förderung von Kohlenwasserstoffen verwendet wird, wobei die Zusammensetzung mindestens einen Zusatzstoff zur Verhinderung der Ablagerung von Mineralstoffen und mindestens einen Korrosionshemmer umfasst.

**Claims**

1. Composition comprising at least one corrosion inhibitor, at least one mineral scale inhibitor, at least one sulfur-comprising additive chosen from mercapto acids and mercapto alcohols, and at least one compatibility agent, in which composition:

   - the compatibility agent is a water-soluble nonionic, cationic or amphoteric surfactant chosen from ethoxylated fatty-chain amines, quaternized fatty acid chain amines, fatty-chain amino acids, oxyethylated and/or oxypropylated condensates, alkylarylsulfonates, oxyethylated and/or oxypropylated fatty-chain alcohols, and also the mixtures of two or more of them in all proportions, and
   - the corrosion inhibitor is chosen from fatty amines, fatty amine derivatives chosen from amino acids, aminoalcohols, aminoamines, quaternary ammoniums and pyridine derivatives, imidazolines substituted by at least one fatty chain, ester amines, ether amines, fatty alcohol derivatives and phosphoric esters substituted by at least one fatty chain,

   the expression "fatty chain" defining a hydrocarbon radical comprising at least 8 carbon atoms.

2. Composition according to Claim 1, in which the mineral scale inhibitor is chosen from acidic or neutralized aminophosphonates, poly(acrylic acid)s, poly(alkyl acrylate)s, copolymers based on phosphinocarboxylic acids, tannins, lignosulfonates, polyacrylamides, naphthalenesulfonates and others.

3. Composition according to either one of the preceding claims, additionally comprising at least one solvent preferably chosen from water, water-soluble organic solvents and water/water-soluble organic solvent(s) mixtures.

4. Composition according to any one of the preceding claims, comprising:

   - from 10% to 40%, preferably from 15% to 40%, more preferably from 20% to 40%, by weight, of at least one mineral scale inhibitor,
   - from 15% to 60%, preferably from 20% to 55%, more preferably from 25% to 50%, by weight, of at least one corrosion inhibitor,
   - from 1% to 20%, preferably from 4% to 20%, by weight, of at least one compatibility agent as defined above, and
   - optionally at least one solvent in a quantity sufficient for (q.s. for) reaching 100%.

5. Composition according to any one of the preceding claims, in which the sulfur-comprising additive is chosen from mercaptoethanol, mercaptopropanol, thioglycolic acid and mercaptopropionic acid.

6. Composition according to any one of the preceding claims, comprising:

   - from 10% to 40%, preferably from 15% to 40%, more preferably from 20% to 40%, by weight, of at least one mineral scale inhibitor,
   - from 15% to 60%, preferably from 20% to 55%, more preferably from 25% to 50%, by weight, of at least one corrosion inhibitor,
   - from 1% to 20%, preferably from 4% to 20%, of at least one compatibility agent as defined above, and
   - from 1% to 10%, preferably from 3% to 10%, by weight, of at least one sulfur-comprising additive as defined above, and
   - optionally at least one solvent in a quantity sufficient for (q.s. for) reaching 100%.

7. Use of a composition according to any one of the preceding claims in the field of the extraction of hydrocarbons, oil or gas, continuously, batchwise or by the squeeze method, preferably continuously, in the lines for the extraction of said hydrocarbons.

8. Use according to the preceding claim, in which the amount of bifunctional composition injected is between 1 ppm and 1000 ppm, preferably between 50 ppm and 800 ppm (weight/volume).

9. Use of at least one sulfur-comprising additive chosen from mercapto acids and mercapto alcohols in a bifunctional composition according to any one of Claims 1 to 6 used in the field of the extraction of hydrocarbons, said composition comprising at least one mineral scale inhibitor and at least one corrosion inhibitor.

--Figure 1 --

--Figure 2 --

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008110789 A

**Littérature non-brevet citée dans la description**

- Development of combined multifunctional chemical inhibitors. **D. ANN DAVIS.** Controlling Hydrates, Waxes And Asphaltenes. IBC UK Conferences Ltd, 20 Octobre 1997